# EUROPÄISCHE PATENTSCHRIFT

(11) **EP 0 684 352 B1**
(45) Veröffentlichungstag und Bekanntmachung des Hinweises auf die Patenterteilung: **04.08.1999**
(21) Anmeldenummer: 95107160.4
(22) Anmeldetag: 11.05.1995
(51) Int. Cl.: E04C 2/54, E04C 2/20, B29C 47/20

(54) **Extrudierte, ebene Stegmehrfachplatte aus thermoplastischem Kunststoff**
Extruded flat multilayer cross-braced plate made of thermoplastic plastics
Plaque multicouche entretoisée en matière thermoplastique

(30) Priorität: 25.05.1994 DE 9408574 U
(43) Veröffentlichungstag der Anmeldung: 29.11.1995
(73) Patentinhaber: Röhm GmbH, 64293 Darmstadt (DE)
(72) Erfinder: Kerk, Klaus, D-64347 Griesheim (DE)

(56) Entgegenhaltungen:
- EP-A- 0 105 159
- DE-A- 1 504 800
- DE-U- 8 607 389

## Beschreibung

Die Erfindung betrifft eine einstückig extrudierte, ebene Stegmehrfachplatte aus thermoplastischem Kunststoff, enthaltend zwei parallele Außenwände dazwischen verlaufende parallele Stege und parallel zu den Außenwänden wenigstens eine Mittelwand, wobei die Stegmehrfachplatte eine Krümmung von weniger als 3 mm/m aufweist.

### Stand der Technik

Extrudierte Stegmehrfachplatten aus thermoplastischem Kunststoff sind seit langem im Bauwesen gebräuchlich. In DE-OS 1 504 800 ist ein Extrusionswerkzeug für ihre Herstellung beschrieben. Ein verbessertes Extrusionswerkzeug, das eine genaue Einstellung der Düsenlippen zur Bildung der Außenwände erlaubt, ist aus EP-A 435 078 bekannt. Dort wird auf den symmetrischen Düsenaufbau hingewiesen, wodurch grundsätzlich Außenwände gleicher Dicke erzeugt werden.

Aus Firmenschriften der General Electric Plastics ("Lexan® Thermoclear® Sheet") sind asymmetrische Stegmehrfachplatten mit sogenannter Tunnelstruktur bekannt. Darin ist jeweils eine der Außenwände an den Ansatzstellen der Stege verstärkt und nimmt bis zur Mitte zwischen jeweils zwei Stegen etwa auf die gleiche Wanddicke wie die der anderen Außenwand ab. In der Mitte zwischen den beiden Außenwänden ist bei manchen Ausführungsformen eine Mittelwand angeordnet.

DE-U-8607389 beschreibt eine Hohlkammerplatte aus Acrylglas als lichtdurchlässiges Bedachungselement, deren Gurte eine unterschiedliche Dicke aufweisen. Als Hohlkammerplatten werden Stegdoppelplatten beschrieben, deren dickere Außengurte eine mechanische Beständigkeit z. B. gegen Hagelschlag vermitteln. Der dünnere Innengurt vermindert das Flächengewicht und die Materialkosten.

EP-A 0 105 159 beschreibt Stegmehrfachplatten aus zwei parallelen, im wesentlichen ebenen Außenschichten und einer dazwischen angeordneten Mittelschicht, die gegenüber den Außenschichten aus einem thermoplastischen Kunststoff mit erhöhter Zähigkeit und/oder erhöhter Nullviskosität bestehen.

### Aufgabe und Lösung

Die Aufgabe der Erfindung bestand darin, entsprechende Stegplatten mit einer oder mehreren Zwischenwänden parallel zu den Außenwänden zur Verfügung zu stellen. Dabei wird auf hohe Flächenbelastbarkeit Wert gelegt.

Die Aufgabe wird gelöst durch eine einstuckig extrudierte, ebene Stegmehrfachplatte aus thermoplastischem Kunststoff, enthaltend zwei parallele Außenwände (1,2) und dazwischen verlaufende parallele Stege (4), enthaltend parallel zu den Außenwänden wenigstens eine Mittelwand (3), wobei die Stegmehrfachplatte eine Krümmung von weniger als 3 mm/m aufweist,
dadurch gekennzeichnet,
daß eine Außenwand (1) an jeder Stelle wenigstens 1,3-fach so dick wie die andere (2) ist, und wenigstens eine Mittelwand (3) etwa in der neutralen Faser (NF) der Stegmehrfachplatte liegt.

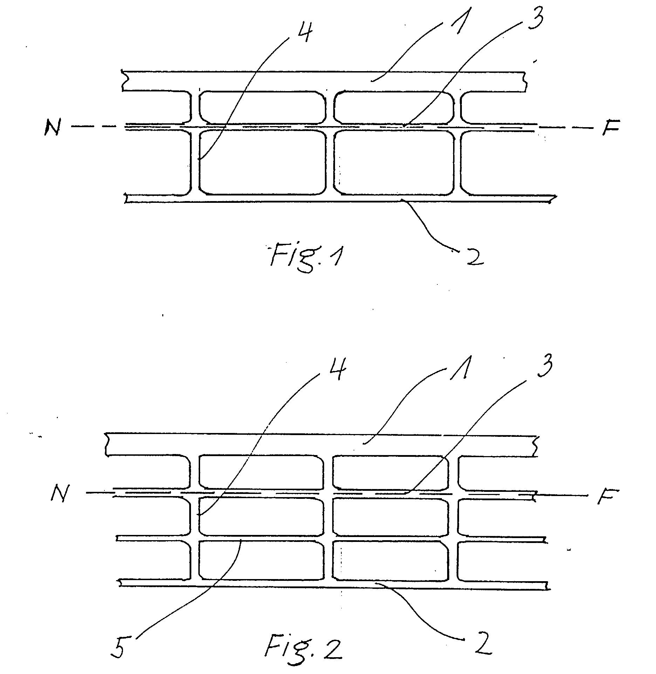

Die Figuren 1 und 2 zeigen ausschittsweise Querschnitte von erfindungsgemäßen Stegmehrfachplatten jedoch ohne Krümmung; und zwar
- **Figur 1**: eine Stegdreifachplatte,
- **Figur 2**: eine Stegvierfachplatte.

Nach den bekannten Extrusionsverfahren waren ebene Stegmehrfachplatten dieser Art nicht zugänglich. Zur Herstellung von Stegmehrfachplatten mit Tunnelstruktur mußte eine leicht asymmetrische Extrusionsdüse verwendet werden, wobei das Problem der Krümmung bei der Abkühlung gerade noch beherrschbar ist.

Um unsymmetrische Stegmehrfachplatten gemäß der Erfindung herzustellen, muß einer der Längsschlitze der Extrusionsdüse zur Ausbildung der Außenwände dicker sein als der andere. Der Dickenunterschied führt zu einem unterschiedlichen Abkühlungsverhalten der Außenwände im Vakuumformkanal und dieses wiederum zu einer unterschiedlichen thermischen Schrumpfung. Es entstehen in jedem Fall deutlich gekrümmte Stegmehrfachplatten, die für Verglasungen nicht annehmbar wären.

Die Außenwände sind an der Außen- und Innenseite parallel begrenzt, wodurch eine Verzerrung des optischen Strahlenganges vermieden und eine gute Durchsichtigkeit gewährleistet ist. Die Außenwände sind so dick zu gestalten, daß die wetterseitig angeordnete Seite ausreichend hagelbeständig ist, während die zur Innenseite des verglasten Gebäudes gelegene Außenwand der Stegmehrfachplatte und gegebenenfalls dazwischen angeordnete Mittelebenen nur so dick zu sein brauchen, daß die erwünschte wärmeisolierende Wirkung erreicht wird. Die Belastbarkeit genügt den normalen Verkehrslasten, die bei üblichen Bauanwendungen, insbesondere im Gewächshausbau, auftreten.

Vorzugsweise ist die dickere Außenwand (1) 1 bis 6 mm und die dünnere Außenwand (2) 0,3 bis 2,5 mm dick. Bei Platten aus Polycarbonat erreicht man bei Außenwanddicken von 1,1 und 0,8 mm bereits ein günstiges Verhältnis von hoher Hagelfestigkeit und niedrigem Materialaufwand. Für diesen Werkstoff sind Dickenverhältnisse von 1,3 bis 4, vorzugsweise von 1,5 bis 3 geeignet. Für Polymethylmethacrylat werden etwas höhere Dickenverhältnisse bevorzugt, insbesondere 2 : 1 bis 4 : 1. Im übrigen können die Profilmaße den handelsüblichen Stegmehrfachplatten entsprechen. Sie sind in der Regel 10 bis 32 mm dick und enthalten parallele Stege in seitlichen Abständen von 10 bis 32 mm, vorzugsweise etwa im Abstand der Plattendicke. Die Krümmung beträgt weniger als 3 mm/m, gemessen in Längs- und Querrichtung. Bevorzugte Werkstoffe für die neuen Platten sind Polymethylmethacrylat, gegebenenfalls mit einem Zusatz von Schlagzähmodifizierungsmitteln, und Polycarbonat, beispielsweise Bisphenol-A-polycarbonat. Auch Polystyrol, gegebenenfalls schlagzäh modifiziert, kommt in Betracht.

Statische Untersuchungen an entsprechend aufgebauten PMMA_ Stegdreifachplatten mit einer Mittelwand (3) haben gezeigt, daß die Belastbarkeit einer 32 mm dicken symmetrischen Stegdreifachplatte mit je 2 mm dicken Mittel- und Außenwänden um die Hälfte größer ist als die einer asymmetrischen Platte von gleicher Gesamtdicke, wobei jedoch eine der Außenwände doppelt so dick wie die andere ist. Bei hoher Belastung knicken die Stege nahe der dickeren Außenwand ein und die Platte bricht.

Er wurde gefunden, daß die Belastbarkeit auf die einer symmetrischen Stegdreifachplatte zunimmt, wenn die Mittelwand (3) in der neutralen Faser (NF) der Platte angeordnet ist.

Als neutrale Faser einer Stegmehrfachplatte wird diejenige Ebene parallel zu den Außenwänden bezeichnet, deren Länge bei Biegebelastung unverändert bleibt. Sie ist in den Figuren 1 und 2 mit den Buchstaben N - F bezeichnet. Bei Belastung nimmt die Länge der konvexen Seite der Platte zu, die der konkaven Seite ab. Die neutrale Faser einer Stegmehrfachplatte mit unterschiedlichen Wanddicken und Wandabständen läßt sich durch eine einfache statische Berechnung ermitteln. Es wurde festgestellt, daß die mechanische Belastbarkeit auf den Wert einer symmetrisch aufgebauten Stegmehrfachplatte ansteigt oder diesen übertrifft; wenn die Mittelebene im Bereich der neutralen Faser liegt. Vorzugsweise fällt die berechenbare neutrale Faser mit der Mittelwand (3) zusammen, jedoch sind geringfügige Abweichungen von dieser Lage ohne Nachteil. Durch weitere parallele Zwischenwände (5) wird die mechanische Belastbarkeit nicht wesentlich verändert, allerdings verschiebt sich die Lage der neutralen Faser.

Zur Herstellung der neuen Stegmehrfachplatten dient ein Verfahren, bei dem in an sich bekannter Weise durch einstückige Extrusion aus thermoplastischem Kunststoff aus einer Düse, die zwei parallele Längsschlitze zur Bildung der Außenwände, einen oder mehrere dazwischen liegende Längsschlitze zur Bildung der Mittelwände (3,5) und verbindende Querschlitze zur Bildung der Stege (4) enthält, ein extrudierter Hohlkammerstranges gebildet und in einem Vakuumformkanal geformt und gleichzeitig unter die Erweichungstemperatur des thermoplastischen Kunststoffes abgekühlt wird. Gemäß der Erfindung werden aus den Längsschlitzen Außenwände von unterschiedlicher Dicke extrudiert, wobei eine der Außenwände wenigstens 1,3-fach so dick wie die andere extrudiert wird. Zur Vermeidung einer ungleichmäßigen Abkühlung und Krümmung der extrudierten Bahn werden die Flächen zur Kühlung der Außenwände in dem Vakuumformkanal wenigstens in einem Teil ihrer Längserstreckung in der Weise auf unterschiedlichen Temperaturen unterhalb der Erweichungstemperatur des thermoplastischen Kunststoffes gehalten, daß die Fläche zur Kühlung der dünneren Außenwand eine höhere Temperatur als die Fläche zur Kühlung der dickeren Außenwand hat. Vorzugsweise beträgt der Temperaturunterschied zwischen der wärmeren und der kühleren Fläche 20 bis 80 Kelvin. In der Regel wird die Stegmehrfachplatte waagerecht extrudiert, wobei die dickere Außenwand unten und die dünnere Außenwand oben liegt.

### Beispiel 1

Eine technische PMMA-Formmasse wird bei einer Schmelzetemperatur von 240-260°C mittels einer Stegdoppelplatten-Extrusionsdüse zu einem Hohlkammerstrang von 1200 mm Breite und 16 mm Dicke extrudiert. Der obere Längsschlitz hat eine Dicke von 3 mm, der untere von 5 mm. Stegabstände 32 mm.

Der Hohlstrang wird in einem Vakuumformkanal mit einem Profilquerschnitt von 1200 x 16 mm bei einem Unterdruck von 50 bis 160 mbar kalibriert. Der Formkanal hat eine Länge von 750 mm. In den ersten 600 mm seiner Länge wird die obere Wand auf 75°C und die untere Wand auf 38°C eingestellt. In den letzten 150 mm beträgt die Temperatur oben und unten 95°C.

Es wird eine Stegdreifachplatte aus PMMA extrudiert. Die Abmessungen sind:
Plattendicke 32 mm
Obergurt (bei der Extrusion untenliegend) Dicke 4 mm Mittelwand-Dicke 2 mm
Untergurt-Dicke 2 mm
Obere Hohlkammer, lichte Höhe 9 mm
Untere Hohlkammer, lichte Höhe 15 mm
Stegabstände 32 mm
Gesamtbreite 1200 mm
Neutrale Faser, Abstände von Außenseiten 18,0/14,0 mm
Krümmung in Längs- und Querrichtung: weniger als 2 mm/m.

## Patentansprüche

1. Einstückig extrudierte, ebene Stegmehrfachplatte aus thermoplastischem Kunststoff, enthaltend zwei parallele Außenwände (1,2) und dazwischen verlaufende parallele Stege (4), enthaltend parallel zu den Außenwänden wenigstens eine Mittelwand (3), wobei die Stegmehrfachplatte eine Krümmung von weniger als 3 mm/m aufweist,
dadurch gekennzeichnet,
daß eine Außenwand (1) an jeder Stelle wenigstens 1,3-fach so dick wie die andere (2) ist, und wenigstens eine Mittelwand (3) etwa in der neutralen Faser (NF) der Stegmehrfachplatte liegt.

2. Stegmehrfachplatte nach Anspruch 1, dadurch gekennzeichnet, daß die dickere Außenwand (1) 1 bis 6 mm und die dünnere Außenwand (2) 0,3 bis 2,5 mm dick ist.

3. Stegmehrfachplatte nach Anspruch 1 oder 2, dadurch gekennzeichnet, daß sie aus Polymethylmethacrylat oder Polycarbonat besteht.

4. Stegmehrfachplatte nach einem oder mehreren der Ansprüche 1 bis 3, dadurch gekennzeichnet, daß sie wenigstens zwei Mittelwände (3,4) enthält.

5. Stegmehrfachplatte nach einem oder mehreren der Ansprüche 1 bis 4, dadurch gekennzeichnet, daß sie aus Polymethylmethacrylat besteht und eine Außenwand (1) wenigstens doppelt so dick wie die andere (2) ist.

6. Verfahren zur Herstellung einer ebenen Stegmehrfachplatte, nach einem oder mehreren der Ansprüche 1 bis 5, durch einstückige Extrusion aus thermoplastischem Kunststoff aus einer Düse, die zwei parallele Längsschlitze zur Bildung der Außenwände, einen oder mehrere dazwischen liegende Längsschlitze zur Bildung der Mittelwände (3, 5) und verbindende Querschlitze zur Bildung der Stege enthält, und Formung des extrudierten Hohlkammerstranges in einem Vakuumformkanal unter gleichzeitiger Abkühlung unter die Erweichungstemperatur des thermoplastischen Kunststoffes,
dadurch gekennzeichnet, daß
aus den Längsschlitzen Außenwände von unterschiedlicher Dicke extrudiert werden, wobei eine der Außenwände wenigstens 1,3-fach so dick wie die andere extrudiert wird, aus den dazwischen liegenden Längsschlitzen wenigstens eine Mittelwand (3), die etwa in der neutralen Faser (NF) der Stegmehrfachplatte liegt extrudiert wird und daß die Flächen zur Kühlung der Außenwände in dem Vakuumformkanal wenigstens in einem Teil ihrer Längserstreckung in der Weise auf unterschiedlichen Temperaturen unterhalb der Erweichungstemperatur des thermoplastischen Kunststoffes gehalten werden, daß die Fläche zur Kühlung der dünneren Außenwand auf einer höheren Temperatur als die Fläche zur Kühlung der dickeren Außenwand gehalten wird.

7. Verfahren nach Anspruch 6, dadurch gekennzeichnet, daß der Temperaturunterschied zwischen der wärmeren und der kühleren Fläche 20 bis 80 Kelvin beträgt.

8. Verfahren nach Anspruch 6 oder 7, dadurch gekennzeichnet, daß die Stegmehrfachplatte waagerecht extrudiert wird und die dickere Außenwand unten und die dünnere Außenwand oben liegt.

## Claims

1. A flat multiple web plate of thermoplastic material, extruded in one piece, containing two parallel outer walls (1, 2) and parallel webs running between (4), containing at least one central wall (3) parallel to the outer walls, wherein the multiple web plate has a curvature of less than 3 mm/m, characterised in that one outer wall (1) is at least 1.3 times as thick at any point as the other (2), and at least one central wall (3) lies in the neutral axis (NF) of the multiple web plate.

2. A multiple web plate according to claim 1, characterised in that the thicker outer wall (1) is 1 to 6 mm thick and the thinner outer wall (2) is 0.3 to 2.5 mm thick.

3. A multiple web plate according to claim 1 or 2, characterised in that it comprises polymethylmethacrylate or polycarbonate.

4. A multiple web plate according to one or more of claims 1 to 3, characterised in that it contains at least two central walls (3, 4).

5. A multiple web plate according to one or more of claims 1 to 4, characterised in that it comprises polymethylmethacrylate and one outer wall (1) is at least twice as thick as the other (2).

6. A process for the production of a flat multiple web plate according to one or more of claims 1 to 5, by means of one-piece extrusion of thermoplastic material from a jet which has two parallel longitudinal slots for formation of the outer walls, one or more longitudinal jets positioned between these for the formation of the central walls (3, 5) and connecting transverse slots to form the webs, and formation of the extruded hollow chamber strand in a vacuum moulding channel whilst simultaneously cooling to below the softening temperature of the thermoplastic material,
characterised in that outer walls of differing thickness are extruded from the longitudinal slots, wherein one of the outer walls is extruded at least 1.3 times as thick as the other, at least one central wall (3), which lies approximately in the neutral axis (NF) of the multiple web plate, is extruded from the longitudinal slots lying in between and that at least a part of the longitudinal extent of the surfaces are kept at varying temperatures below the softening temperature of the thermoplastic material to cool the outer walls in the vacuum moulding channel, that the surface for cooling the thinner outer wall is kept at a higher temperature than the surface for cooling the thicker outer wall.

7. A process according to claim 6, characterised in that the temperature difference between the warmer and the cooler surface is 20 to 80 Kelvin.

8. A process according to claim 6 or 7, characterised in that the multiple web plate is extruded horizontally and that the thicker outer wall is on the bottom and the thinner outer wall is on the top.

## Revendications

1. Plaque multicouche entretoisée plane, extrudée d'une seule pièce en matière synthétique thermoplastique, contenant deux parois extérieures (1, 2) parallèles et des entretoises (4) parallèles s'étendant entre elles, contenant, parallèlement aux parois extérieures, au moins une paroi médiane (3), la plaque multicouche entretoisée présentant une courbure inférieure à 3 mm/m,
caractérisée en ce qu'
une paroi extérieure (1) est, en tout emplacement, d'au moins 1,3 fois l'épaisseur de l'autre paroi extérieure (2), et au moins une paroi médiane (3) étant située à peu près dans la fibre neutre (NF) de la plaque multicouche entretoisée.

2. Plaque multicouche entretoisée selon la revendication 1,
caractérisée en ce que
la paroi extérieure (1) la plus épaisse est d'une épaisseur de 1 à 6 mm et la paroi extérieure (2) la plus mince est d'une épaisseur comprise entre 0,3 et 2,5 mm.

3. Plaque multicouche selon la revendication 1 ou 2,
caractérisée en ce qu'
elle est constituée de polyméthylmétacrylate ou de polycarbonate.

4. Plaque multicouche selon l'une ou plusieurs des revendications 1 à 3,
caractérisée en ce qu'
elle contient au moins deux parois médianes (3, 4).

5. Plaque multicouche selon l'une ou plusieurs des revendications 1 à 4,
caractérisée en ce qu'
elle constituée de polyméthylméthacrylate et une paroi extérieure (1) étant au moins d'une épaisseur double de celle de l'autre paroi extérieure (2).

6. Procédé de fabrication d'une plaque multicouche entretoisée plane, selon l'une ou plusieurs des revendications 1 à 5, par extrusion d'une seule pièce à partir de matière synthétique thermoplastique depuis une filière qui contient deux fentes longitudinales parallèles, pour former les parois extérieures, une ou plusieurs fentes longitudinales en position intermédiaire, pour former les parois médianes (3, 5), et des fentes transversales assurant la liaison, pour former les entretoises, et le formage du boudin à chambre creuse extrudé dans un canal de moulage sous-vide, avec refroidissement simultané à une température inférieure au point d'amollissement de la matière synthétique thermoplastique,
caractérisé en ce qu'
à partir des fentes longitudinales on extrude des parois extérieures d'épaisseur différentes, l'une des parois extérieures étant extrudée à une épaisseur d'au moins 1,3 fois celle de l'autre, à partir des fentes longitudinales situées en position intermédiaire on extrude au moins une paroi médiane (3) qui est située à peu près dans la fibre neutre (NF) de la plaque multicouche entretoisée, et en ce que les faces, prévues pour le refroidissement des parois extérieures dans le canal de moulage sous vide, sont maintenues, au moins sur une partie de leur étendue longitudinale, à des températures différentes, inférieures à la température d'amollissement de la matière synthétique thermoplastique, de manière que la face destinée au refroidissement de la plaque extérieure la plus mince soit maintenue à une température supérieure à la face destinée au refroidissement de la plaque extérieure la plus épaisse.

7. Procédé selon la revendication 6,
caractérisé en ce que
la différence de températures entre la face la plus froide et la face la plus chaude est comprise dans la plage allant de 20 à 80 degrés Kelvin.

8. Procédé selon la revendication 6 ou 7,
caractérisé en ce que
la plaque multicouche entretoisée est extrudée horizontalement et la paroi extérieure plus épaisse est située en position inférieure et la paroi extérieure la plus mince en position supérieure.
